# EUROPÄISCHE PATENTANMELDUNG

(11) **EP 1 580 588 A1**
(43) Veröffentlichungstag der Anmeldung: **28.09.2005**
(21) Anmeldenummer: 05100673.2
(22) Anmeldetag: 01.02.2005
(51) Int. Cl.: G02B 27/01

(54) **Vorrichtung zur visuellen Darstellung einer Information**

(30) Priorität: 25.03.2004 DE 102004014671
(71) Anmelder: ROBERT BOSCH GMBH, 70442 Stuttgart (DE)
(72) Erfinder: Koenig, Winfried, 76327, Pfinztal (DE); Eschler, Johannes, 71254, Ditzingen (DE); Hauk, Markus, 71696, Moeglingen (DE); Guenther, Clemens, 76275, Ettlingen (DE); Engeln, Arnd, 72072, Tuebingen (DE); Grimm, Dietmar, 71696, Moeglingen (DE)

(57) **Zusammenfassung**

Es wird eine Vorrichtung zur visuellen Darstellung einer Information (20, 21) auf einem transparenten oder teiltransparenten Scheibenabschnitt eines Fahrzeugs (1), der im für einen Fahrzeuglenker sichtbaren Bereich liegt, mit einem Projektionsmodul, mit welchem die Information (20, 21) in den Scheibenabschnitt projizierbar ist, vorgeschlagen. Für eine Projizierung der Information (20) auf eine transparente bzw. teiltransparente Scheibe (4, 33), wobei das projizierte Bild auch bei Tageslichtbedingungen sicher ablesbar ist, sind mehrere Projektionsmodule vorgesehen, mit welchen sich zumindest zeitweilig die Information (20, 21) im jeweils zugeordneten Scheibenabschnitt darstellen lässt.

## Beschreibung

### Stand der Technik:

Informationsanzeigen in Fahrzeugen werden in zunehmendem Maße als sogenannte Head-up Displays (HUD) eingesetzt. Bei solchen Displays kann der Fahrzeuglenker Informationen im Bereich der Windschutzscheibe ablesen, ohne seinen Blick von dem sich vor dem Fahrzeug befindlichen Bereich abzuwenden.

So können beispielsweise Tachoanzeigen bzw. andere Instrumentenanzeigen, die gewöhnlich im Armaturenbrett angeordnet sind, in Form eines permanent projizierten Head-up Display-Bildes realisiert werden.

Darüber hinaus sind außerdem Nachtsicht- bzw. Kollisionsvermeidungssysteme mit Head-up Projektion bekannt, die auf die Darstellung eines permanent vorhandenen Bildes im Bereich der Windschutzscheibe verzichten, um eine erhöhte visuelle Belastung für den Fahrer zu vermeiden.

Nachteilig bei den bekannten Anzeigesystemen ist die vergleichsweise geringe Helligkeit des darzustellenden Bildes auf der Windschutzscheibe für einen Betrieb bei Tageslicht.

### Aufgabe und Vorteile der Erfindung:

Aufgabe der vorliegenden Erfindung ist es, eine Vorrichtung bereitzustellen, mit der Informationen auf eine transparente bzw. teiltransparente Scheibe projizierbar sind und das projizierte Bild auch bei Tageslichtbedingungen sicher ablesbar ist.

Diese Aufgabe wird durch die Merkmale des Anspruchs 1 gelöst. In den Unteransprüchen sind vorteilhafte und zweckmäßige Weiterbildungen der Erfindung angegeben.

Die Erfindung geht aus von einer Vorrichtung zur visuellen Darstellung einer Information auf einem Abschnitt einer transparenten oder teiltransparenten Scheibe eines Fahrzeugs, der im für einen Fahrzeuglenker sichtbaren Bereich liegt, mit einem Projektionsmodul, mit welchem die Information in den Scheibenabschnitt projizierbar ist.

Der Kern der Erfindung liegt darin, dass mehrere Projektionsmodule vorgesehen sind, mit welchen sich zumindest zeitweilig die Information im jeweils zugeordneten Scheibenabschnitt darstellen lässt.

Die Erfindung macht sich den Umstand zunutze, dass die Helligkeit eines mit einem Projektionsmodul dargestellten Bildes naturgemäß mit abnehmender Größe zunimmt. Bei gleicher Lichtleistung kann ein kleineres Bild vergleichsweise heller als ein größeres Bild dargestellt werden. Dies bedeutet, dass in einem Scheibenabschnitt, in dem eine Information dargestellt werden soll, bei Verwendung nur eines Projektionsmoduls die Helligkeit in der Regel deutlich geringer ist, als wenn in diesem Scheibenabschnitt mehrere Projektionsmodule zur Anzeige verwendet werden.

Außerdem muss bei Nutzung nur eines Projektionsmoduls, mit dem beliebige Informationen auf der Scheibe an unterschiedlichen Positionen dargestellt werden sollen, dieses Projektionsmodul relativ aufwändig und flexibel ausgebildet sein. Ein solches Projektionsmodul nutzt beispielsweise eine Matrix-Flüssigkristallanzeige bzw. -LCD (liquid crystal display) mit vergleichsweise vielen Bildpunkten. Demgegenüber kann durch die erfindungsgemäße Vorrichtung mit mehreren Projektionsmodulen jedes dieser Module vergleichsweise einfach und kompakt realisiert werden.

Durch die Verwendung mehrerer relativ einfacher Projektionsmodule anstatt eines komplexeren Projektionsmoduls, wie z.B. LCD, können auch Vorteile z.B. im Hinblick auf Störungsanfälligkeit, Reparatur- bzw. Wartungshäufigkeit erzielt werden.

Jedes einzelne der mehreren Projektionsmodule stellt in einem bestimmten Bereich seiner Projektionsfläche die Information dar. Durch diese Anordnung lassen sich für eine sichere Erkennung durch das menschliche Auge, auch für Tageslichtbedingungen ausreichend helle Informationsbilder darstellen. In der Regel wird eine Information in der Projektionsfläche eines Projektionsmoduls angezeigt, es können jedoch auch mehrere Information in einer Projektionsfläche zur Anzeige gebracht werden.

Wie gezeigt ist die erfindungsgemäße Vorrichtung technisch und wirtschaftlich vorteilhaft gegenüber herkömmlichen Vorrichtungen. Sie ist für Fahrzeuge aller Art vorteilhaft einsetzbar, z.B. für Fahrzeuge zu Land, Luft, Wasser und im All.

Vorteilhafterweise wird die Information im jeweils zugeordneten Scheibenabschnitt nicht dauerhaft, sondern nur zeitweise dargestellt. Hierdurch lässt sich eine situationsbedingte Darstellung erreichen, die außerdem die visuelle Belastung für einen Fahrzeuglenker auf das notwendige Maß beschränkt.

In einer bevorzugten Ausführungsform der Erfindung sind Detektionsmittel zur Erfassung der Umgebung des Fahrzeugs vorgesehen, wobei die Projektionsmodule eine Information in den einem Projektionsmodul jeweils zugeordneten Scheibenabschnitt in Abhängigkeit von den mit den Detektionsmitteln erfassten Daten projizieren.

Durch diese Abhängigkeit der Projizierung der Information kann insbesondere eine klare Zuordnung z.B. der in der Umgebung des Fahrzeugs erfassten Objekte, z.B. vorausfahrende Fahrzeuge oder Personen im Nahbereich des Fahrzeuges, zu einer Informationsanzeige in einem bestimmten Scheibenabschnitt erreicht werden. Dies führt zu einer insgesamt sehr effektiven Informationsbereitstellung für den Fahrzeuglenker.

Vorteilhafterweise steht jedem der mehreren Projektionsmodule ein jeweils zugeordneter Scheibenabschnitt zur Darstellung der Information zur Verfügung. Somit ist es neben der eindeutigen Zuordnung einer Information auf einen festgelegten Darstellungsort auch möglich, verschiedene bzw. gleichzeitig erfasste Objekte darzustellen. Beispielsweise lassen sich mindestens so viele einzelne Informationen auf der Scheibe darstellen, wie Projektionsmodule eingerichtet sind. Damit kann zeitnah eine vergleichsweise große Informationsmenge dem Fahrzeuglenker zur Verfügung gestellt werden. Es können damit die Informationen derart dargestellt werden, dass ein Fahrzeuglenker eine Gefahr eindeutig erfassen und dieser rechtzeitig und insbesondere zielgerichtet entgegenwirken kann. Solche Informationen sind beispielsweise auf erkannte Personen oder Gegenstände bezogene Kollisionswarnungen.

Als Detektionsmittel kommen an sich bekannte Einrichtungen in Frage, mit denen die gesamte Umgebung des Fahrzeugs, insbesondere jedoch ein Winkelbereich in Fahrtrichtung des Fahrzeugs vor dem Fahrzeug detektiert werden kann. Zu nennen sind z.B. Abstands-Detektionssysteme. Die vorgeschlagene Vorrichtung kann insbesondere auch eine moderne Videoanalyse z.B. auch mit Nachtsichteinrichtungen umfassen oder mit diesen zusammenarbeiten.

Eine weitere bevorzugte Ausführungsform sieht vor, dass mit Hilfe der Detektionsmittel eine Projektion einer Information durch die Projektionsmodule derart vorgenommen wird, dass für den Fahrzeuglenker bei der Betrachtung eines Projektionsbildes im Scheibenabschnitt eine vergleichsweise leichte, insbesondere intuitive Korrelation, insbesondere im Hinblick auf die Position eines von den Detektionsmitteln erfassten Objekts möglich ist.

Durch die Möglichkeit verschiedene Informationen an unterschiedlichen Stellen auf der Scheibe anzuzeigen, kann der Fahrzeuglenker direkt und einfach auf das Objekt schließen, insbesondere auf dessen Position in der Umgebung des Fahrzeugs. So können z.B. Orts- und/oder Bewegungsgrößen des erfassten Objekts vom Fahrzeuglenker schnell aufgenommen und seine Fahrzeugführung entsprechend zielgerichtet und rechtzeitig angepasst werden.

Mit der Anzeige z.B. eines Warnsymbols wird neben der Information, die allein schon durch das Erscheinen der Information an einer bestimmten Stelle auf der Scheibe informativ ist, in der Regel auch ein ausdrücklicher Informationsgehalt durch die Art des Symbols bereitgestellt. Der Fahrzeuglenker kann diese Information ebenfalls z.B. in einem weiteren Schritt verarbeiten. Beispielsweise kann eine Information aus einem Warnsymbol mit einem Zahlenwert bestehen, womit z.B. durch ein Warndreieck die Gefahr an sich darstellbar ist und die Zahl den Abstand zwischen dem erfassten Objekt und dem eigenen Fahrzeug beziffert. Die Abstandsgröße, als eine der wichtigsten Größen für eine sichere Fahrzeugführung, kann erfindungsgemäß demnach in zweifacher Hinsicht charakterisiert werden.

Bei einer bevorzugten Ausgestaltung des Erfindungsgegenstandes ist die einem erfassten Objekt zugehörige Information in einen transparenten oder teiltransparenten Scheibenabschnitt projizierbar, der im Blickfeld des Fahrzeuglenkers bei der Betrachtung des Objekts liegt. Dies hat insbesondere den Vorteil, dass der Fahrzeuglenker in seiner Aufmerksamkeit bei der Betrachtung des vor dem Fahrzeug liegenden Bereichs mit dem erfassten Objekt nicht nachteilig beeinträchtigt wird, da er seinen Blick zum Informationsempfang nicht von diesem Bereich abwenden muss.

Es ist mit der erfindungsgemäßen Vorrichtung auch möglich, die Information dem vom Fahrzeuglenker erkennbaren reellen Bildes des Objekts zu überlagern und insbesondere sozusagen ein virtuelles Bild durch die Information bzw. durch ein Informationssymbol zu erzeugen. Damit kann die Information besonders eindeutig und schnell dem entsprechenden Objekt zugeordnet werden. Dabei ist es auch möglich, die Information nahezu deckungsgleich zu dem dazugehörigen erfassten Objekt auf dem Scheibenabschnitt abzubilden. Es ist jedoch besonders einfach und effektiv, wenn die Information lediglich durch ein prägnantes Symbol dargestellt wird, z.B. in abstrahierter bzw. ikonifizierter Darstellung, beispielsweise als Zeichen- oder Ziffernsymbol.

Zur besseren Erkennung der Information durch höhere Bildschärfe bzw. -helligkeit, können die Scheibenabschnitte, in denen die Information angezeigt wird, mit einer Folie bzw. einer Beschichtung versehen werden, oder ein separater Combiner eingesetzt werden.

Gemäß einer weiteren vorteilhaften Ausgestaltung der Erfindung erfolgt die Projektion der Information auf einen Scheibenabschnitt, dessen Position auf der Scheibe dem Fahrzeuglenker eine eindeutige Richtungszuordnung auf das entsprechenden Objekt ermöglicht.

Ein Fahrzeuglenker kann insbesondere bereits durch die Position des jeweiligen Scheibenabschnitts auf der Scheibe, in dem eine Information angezeigt wird, direkt auf die Position des erfassten Objekts schließen bzw. auf die Richtung, aus der dieses Objekt sich dem eigenen Fahrzeug nähert. Zum Beispiel wenn eine Information im Bereich links vor ihm auf der Frontscheibe erscheint, wird seine erhöhte Aufmerksamkeit unmittelbar und ggf. auch unbewusst in diese Richtung gelenkt. In dieser Richtung erkennt er direkt das Objekt oder er wird das Objekt dieser Richtung zuordnen, z.B. wenn dieses sich aus dieser Richtung auf das Fahrzeug zubewegt, aber noch nicht vom Fahrer erkennbar ist. Erfindungsgemäß kann somit auch auf Objekte aufmerksam gemacht werden, die im Moment der Informationsanzeige vom Fahrzeuglenker nicht erkennbar sind. Vorteilhafterweise kann bereits dann eine Reaktion durch den Fahrzeuglenker erfolgen. In einem solchen Fall kann dies dem Fahrzeuglenker durch ein diesem Umstand zugeordnetes Symbol angezeigt werden, z.B. durch einen in Richtung des Objekts gerichteter Pfeil.

Außerdem kann so bereits quasi im Moment des Erscheinens der Information auf einem Scheibenabschnitt, unter Berücksichtigung der menschlichen Erkennungs- bzw. Reaktionsverzögerung, der Fahrzeuglenker ggf. reagieren, beispielsweise einen Bremsvorgang einleiten, ohne bereits im ersten Moment die Information in ihrem vollen Gehalt erfasst zu haben.

Es wird weiter vorgeschlagen, dass Projektionsflächen der Projektionsmodule in einem vorgegebenen Teilbereich der transparenten oder teiltransparenten Scheibe konzentriert sind. Durch die Reduzierung des Darstellungsbereichs für die Information in einen Teilbereich der transparenten bzw. teiltransparenten Scheibe, kann das System weiter vereinfacht bzw. das Gesamtsystem wirtschaftlich vorteilhaft ausgebildet werden. Innerhalb des Teilbereichs liegen die jeweiligen Projektionsflächen der Projektionsmodule vergleichsweise eng beieinander. Vorzugsweise berühren sich im Teilbereich die Projektionsflächen, um den Teilbereich möglichst vollständig auszunutzen. Vorteilhafterweise ergibt sich eine zusammenhängende Projektionsfläche. Es ist auch eine Überlappung der einzelnen Projektionsflächen denkbar. Die Projektionsfläche eines Projektionsmodul ist die Fläche, auf der ein Projektionsmodul eine Projektion erzeugt und innerhalb derer es ein Bild darstellen kann.

Innerhalb eines Teilbereichs der Scheibe sind nur relativ wenige Projektionsmodule notwendig, um diesen Teilbereich gänzlich für Projektionen zu nutzen. Beispielsweise ist der Teilbereich so groß, dass zwischen 3 und 8 Projektionsmodule diesen Bereich abdecken können, was die Vorrichtung außerdem vereinfacht und platzsparend ausbildbar macht.

Der Teilbereich kann z.B. rechteckförmig sein, z.B. mit Seitenlängen von 15 und 30 Zentimetern. Der Teilbereich kann unmittelbar im Sichtbereich des Fahrzeugslenkers bei normaler Fahrt liegen. Vorzugsweise in vertikaler Richtung etwas oberhalb der Scheibenwurzel bis hin zur Mitte und in seiner Längsrichtung horizontal auf der Fahrerseite der Scheibe angeordnet sein.

Die Projektionsmodule können darüber hinaus eine von mehreren verschiedenen Informationen darstellen. Mit Hilfe einer wahlweisen Darstellung eines Informationssymbols aus verschiedenen möglichen Symbolen, kann die Flexibilität und Informationsgenauigkeit der im Scheibenabschnitt dargestellten Information zusätzlich erhöht werden. Beispielsweise ist auch eine Abstufung je nach Gefahrensituation in drei Warnstufen denkbar, die sich z.B. in der Art, Größe bzw. der Farbgebung des jeweils angezeigten gewählten Symbols unterscheiden.

In Ergänzung zur visuellen Darstellung einer Information kann die Vorrichtung auch Mittel umfassen oder mit Einrichtungen zusammenwirken, die zusätzliche Sinneseindrücke eines Fahrzeuglenkers ansprechen, beispielsweise kann die visuell dargestellte Information mit einer akustischen Information zeitweise oder auch dauerhaft gekoppelt sein.

Eine besondere Ausgestaltung des Erfindungsgegenstandes sieht vor, dass die mehreren Projektionsmodule derart angeordnet sind, dass zumindest in horizontaler Richtung mehrere für den Fahrzeuglenker unterscheidbare Informationen nebeneinander darstellbar sind. In horizontaler Richtung vor einem Fahrzeug sind in der Regel mehrere weitere Verkehrsteilnehmer am Verkehrsgeschehen beteiligt, so dass in dieser Richtung auch mehrere Informationen für eine entsprechende Informationsanzeige vorteilhafterweise anzuordnen sind.

Schließlich wird weiter vorgeschlagen, dass das Projektionsmodul zumindest eine Beleuchtungseinrichtung, einen Bildträger und eine Projektionsoptik umfasst. Ein solches an sich bekanntes System ist besonders kompakt, einfach und zuverlässig. Ein solches Projektionsmodul kann in der Art eines Diaprojektors bzw. Videoprojektors arbeiten. Beispielsweise lässt sich ein Komplettsystem aus z.B. 4 bis 8 Einzelprojektionsmodulen in einem vergleichsweise kleinen Volumen in einem gemeinsamen Gehäuse unterbringen. Diese kompakte Einheit kann beispielsweise im Bereich der vorderen Armaturen unterhalb der Frontscheibenwurzel eingebracht werden. Die Einzelprojektionsmodule aber auch die gesamte Einheit können ggf. als einfach austauschbare Steckkomponente ausgebildet sein.

### Zeichnung:

Weitere Einzelheiten und Vorteile der Erfindung werden in der Zeichnung anhand von schematisch dargestellten Ausführungsbeispielen beschrieben.

Im Einzelnen zeigen:
- Figur 1: einen Ausschnitt eines im Blickfeld eines Fahrzeuglenkers liegenden Bereichs, mit angedeuteten Umrissen eines Teilbereichs in einer Frontscheibe eines Fahrzeuges,
- Figur 2: eine erfindungsgemäß dargestellte Information im Blickfeld des Fahrzeuglenkers gemäß Figur 1,
- Figur 3: ein Fahrzeug mit Fahrzeuglenker, der zwei mit der erfindungsgemäßen Vorrichtung dargestellte Informationssymbole in seinem Blickfeld erkennt und
- Figur 4: stark schematisiert wesentliche Teile eines einfachen Projektionsmoduls einer erfindungsgemäßen Vorrichtung.

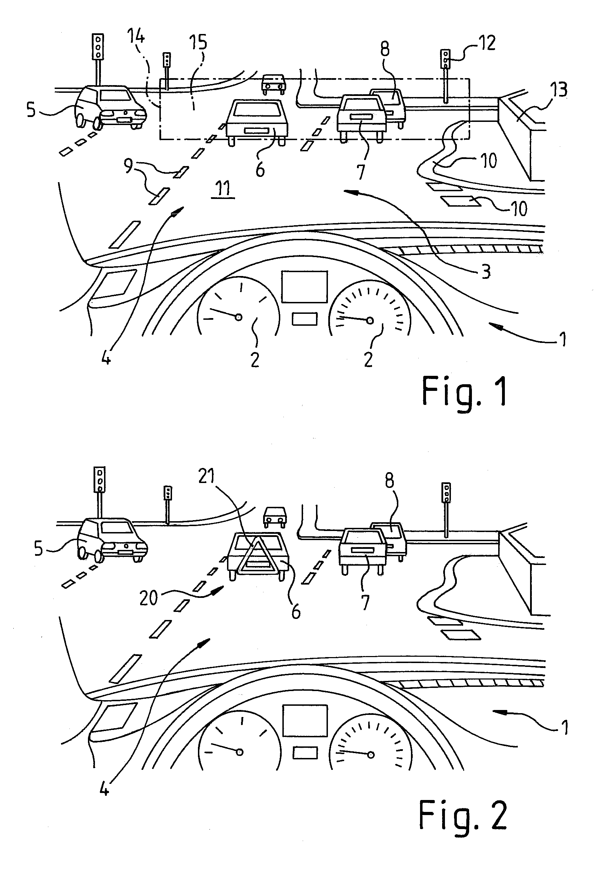

Der in Figur 1 dargestellte Ausschnitt aus einem Blickfeld eines Fahrzeuglenkers, zeigt beispielhaft eine typische Verkehrssituation im Straßenverkehr, wie sie sich vor einem Fahrzeug 1 (nur als Ausschnitt gezeigt) abspielen kann. Neben verschiedenen Anzeigeinstrumenten 2 im Armaturenbrettbereich ist für einen in Figur 1 nicht dargestellten Fahrzeuglenker im Fahrzeug 1 ein Bereich 3 vor dem Fahrzeug 1 durch eine transparente bzw. teiltransparente Frontscheibe 4 einsehbar. Im Bereich 3 sind verschiedene Objekte zu erkennen, z.B. weitere Fahrzeuge 5, 6, 7 und 8.

Des Weiteren sind linke Fahrbahnmarkierungen 9 und Markierungen 10 am rechten Fahrbahnrand einer Fahrbahn 11 zu erkennen. Darüber hinaus befinden sich feststehende Gegenstände im Bereich 3 vor dem Fahrzeug 1, beispielsweise eine Verkehrsampel 12 und ein Mauerabschnitt 13.

In der Frontscheibe 4 ist eine Umrisslinie 14 eines Teilbereichs 15 der Frontscheibe 4 verdeutlicht. Das Flächenverhältnis des Teilbereichs 15 zur Gesamtfläche der Frontscheibe 4 kann in einem weiten Maße variieren.

Der Teilbereich 15 ist so innerhalb der Frontscheibe 4 ausgewählt, dass der Fahrzeuglenker diesen Teilbereich nahezu immer vollständig bzw. zumindest größtenteils im Blickfeld hat. Im Teilbereich 15 können sämtliche für den Fahrzeuglenker wesentlichen visuellen Informationen für eine sichere Fahrzeugführung gesehen werden.

In dem zur Gesamtfläche der Frontscheibe 4 vergleichsweise kleinen Teilbereich 15 sind beispielsweise nahezu 90 % der für den Fahrzeuglenker wesentlichen Ereignisse vor dem Fahrzeug 1 erfassbar.

Die ideale Anordnung des Teilbereichs 15 innerhalb der Frontscheibe 4 kann dabei je nach Verkehrsituation und insbesondere der Geschwindigkeit des Fahrzeuges 1 in unterschiedlichen Abschnitten der Frontscheibe 4 liegen. Dazu kann eine entsprechende Positionierung des Teilbereichs 15 in der Frontscheibe 4 erfolgen, beispielsweise kann die Größe des Teilbereichs 15 variiert werden oder es werden für unterschiedliche Verkehrssituation unterschiedliche Teilbereiche 15 vorgegeben. Beispielsweise kann es sinnvoll sein, für Fahrten, die überwiegend in der Stadt erfolgen, einen anderen Teilbereich 15 festzulegen, als für Fahrten mit höheren Geschwindigkeiten, z.B. auf Autobahnen.

Figur 2 zeigt die gleiche Darstellung der Verkehrssituation wie Figur 1 im Fahrzeug 1, das mit einer erfindungsgemäßen Vorrichtung ausgestattet ist. Dabei wird eine Information 20 in Form eines stilisierten Warnsymbol 21 im Blickfeld des Fahrzeuglenkers auf der Frontscheibe 4 dargestellt. Die Umrisslinie 14 des Teilbereichs 15, wie in Figur 1 gezeigt, ist nicht sichtbar, wobei das Warnsymbol 21 nur innerhalb dieses Teilbereichs dargestellt wird.

Im Fahrzeug 1 sind außerdem nicht dargestellte Detektionsmittel zur Erfassung der Umgebung des Fahrzeugs 1, insbesondere des Bereichs in Fahrtrichtung vor dem Fahrzeug 1 ausgebildet. Die Detektionsmittel können neben objektbezogenen Daten auch andere Umgebungsgrößen detektieren. Zum Beispiel können Temperaturfühler die Luft- bzw. Fahrbahntemperaturen erfassen oder es sind Einrichtungen zur Erzeugung bzw. Auswertung eines Wärmebildes der Umgebung des Fahrzeuges 1 vorgesehen.

Die Vorrichtung zur visuellen Darstellung einer Information auf der Frontscheibe 4 kann eine Elektronikeinheit umfassen, durch welche die von den Detektionsmitteln erhaltenen Signale verarbeitet und in der Vorrichtung einem Projektionsmodul zur Verfügung gestellt werden. Die Elektronikeinheit umfasst in der Regel eine intelligente Erfassungs- und/oder Auswerte-Software.

In der in Figur 2 dargestellten Situation wird erfindungsgemäß die Information 20 in Form des Warnsymbols 21 genau einem von den Detektionsmitteln erfassten Objekt zugeordnet. Hierbei wird durch Erfassung des Fahrzeugs 6 ein Wert erzeugt, der Rückschlüsse über den Abstand des Fahrzeugs 6 zum Fahrzeug 1 zulässt. Die Verarbeitung dieser erfassten Werte erfolgt in der Elektronikeinheit, wobei bei Unterschreitung eines Mindestabstandes des Fahrzeuges 6 zum erfindungsgemäß ausgestatteten Fahrzeug 1 eine visuelle Darstellung des Warnsymbols 21 auf der Frontscheibe 4 erfolgt. Dabei wird das Warnsymbol 21 in einen festgelegten Scheibenabschnitt projiziert. Für jede Position bzw. jedes Segment in dem festgelegten Scheibenabschnitt ist ein Projektionsmodul vorgesehen, mit welchem die Information in das jeweilige Segment im Scheibenabschnitt projizierbar ist.

Bei der in Figur 2 dargestellten Anzeige des Warnsymbols 21 wird genau dasjenige Projektionsmodul aktiv, das dem Scheibenabschnitt zugeordnet ist, in dem der Fahrzeuglenker das Fahrzeug 6 auf der Frontscheibe 4 erkennt. Idealerweise ist ein einem Projektionsmodul zugeordneter Scheibenabschnitt so groß, dass eine eindeutige Zuordnung des dargestellten Warnsymbols 21 zu einem bestimmten Objekt, d.h. im gezeigten Fall zum Fahrzeug 6, ohne weiteres möglich ist. Durch die Darstellung des Warnsymbols 21 im Teilbereich 15 der Frontscheibe 4 kann der Fahrzeuglenker, ohne seinen Blick von dem vor ihm liegenden Bereich abzuwenden, diese Information wahrnehmen und unmittelbar auf diese Information reagieren.

Beispielsweise kann der Fahrzeuglenker im vorliegenden Fall einen Bremsvorgang einleiten. Die Information 20 wird nur so lange auf der Frontscheibe 4 dargestellt, solange das entsprechende erfasste Objekt bzw. die dabei erzeugten Daten einem kritischen Zustand entsprechen, hier z.B. ein Mindestabstand des Fahrzeugs 6 zum eigenen Fahrzeug 1 unterschritten wird. Das Warnsymbol 21, das bei einem kritischen Zustand erscheint, wird also in aller Regel nur zeitlich begrenzt in der Frontscheibe 4 dargestellt werden. Ein kritischer Zustand ist prinzipiell dann gegeben, wenn eine Gefahrensituation in der Verkehrssituation, in der das Fahrzeug 1 teilnimmt, mit einer relativ hohen Wahrscheinlichkeit eintritt.

Dies bedeutet auch, dass in der Regel die Detektionsmittel während des gesamten Fahrbetrieb des Fahrzeugs 1 aktiviert sind, aber nur zeitweilig die dabei erfassten Daten zu einer Informationsanzeige in der Frontscheibe 4 führen. Dabei ist es möglich, dass je nach Verkehrssituation unterschiedliche Detektionssysteme aktiv sind, beispielsweise werden Detektionssysteme zur Nachtsichtverbesserung nur bei Unterschreitung eines Helligkeitswertes in der Umgebung des betreffenden Fahrzeuges 1 aktiviert sein.

Besonders vorteilhaft ist es, wenn der Teilbereich 15 in mehrere Teilabschnitte unterteilt ist und in jedem Teilabschnitt eine gesonderte Information mit jeweils einem Projektionsmodul darstellbar ist. Ist beispielsweise der Teilbereich 15 wie in Figur 1 dargestellt ausgewählt, kann in der Verkehrssituation, wie sie in Figur 2 zu erkennen ist, ein weiteres Warnsymbol im Scheibenabschnitt neben dem ersten angezeigten Warnsymbol 21 dargestellt werden. Dies ist beispielsweise dann vorteilhafterweise der Fall, wenn das gleichfalls von den Detektionsmitteln erfasste Fahrzeug 7 ebenfalls einem kritischen Zustand zugeordnet wird.

Beispielsweise kann auch das Fahrzeug 7 einen Mindestabstand zum betreffenden Fahrzeug 1 unterschreiten und damit eine weitere Informationsanzeige zusätzlich zum Warnsymbol 21 notwendig machen. Innerhalb des Teilbereichs 15 kann dem Fahrzeuglenker also eine Mehrzahl voneinander unterschiedlichen Informationen visuell dargestellt werden. Dabei ist es besonders vorteilhaft, dass auf jedem einem Projektionsmodul zugeordneten Scheibenabschnitt eine Information darstellbar ist, die der Fahrzeuglenker exakt dem Objekt zuordnen kann, das in Blickrichtung der erscheinenden Information liegt.

Die dargestellte Information 20 kann wie gezeigt beispielsweise in Form eines Symbols dargestellt werden, z.B. in Form eines geometrischen Gebildes, z.B. in Form eines Verkehrszeichens oder als Pfeil zur Anzeige der tendenziellen Bewegung der Gefahr, oder eines Schriftzeichens, beispielsweise als Ausrufe- oder Fragezeichen. Die dargestellte Information 20 kann auch die Umrisse des erfassten Objekts nachzeichnen, wie sie sich für den Fahrzeuglenker darstellen und das dargestellte Symbol nahezu deckungsgleich zum entsprechenden Objekt auf der Frontscheibe 4 abbilden. Dies kann beispielsweise ein Symbol mit den Umrissen des Fahrzeuges 6 sein.

Erfindungsgemäß ist es jedoch auch möglich, erfasste Objekte in der Umgebung des Fahrzeugs 1 darzustellen, die nicht im durch den Teilbereich 15 erkennbaren Bereich vor dem Fahrzeug 1 detektiert werden. Beispielsweise ist es möglich, ein sich bewegendes Objekt durch die Detektionsmittel zu erfassen und durch eine Information 20 im Teilbereich 15 darzustellen. Somit kann beispielsweise ein Fahrzeug, das sich von einer Seite beispielsweise dem vorderen Nahbereich vor dem Fahrzeug 1 nähert, dem Fahrzeuglenker angezeigt werden. Beispielsweise kann das Fahrzeug 5, wie es in Figur 2 in der Verkehrssituation zu erkennen ist, einen kritischen Zustand darstellen, wenngleich es außerhalb des durch den Teilbereich 15 durch den Fahrzeuglenker zu erkennenden Bereich liegt. In diesem Falle wäre eine Darstellung einer Information 20 beispielsweise im linken äußeren Rand des Teilbereichs 15 sinnvoll, die z.B. gleichzeitig erkennen lässt, dass die Gefahr noch außerhalb des Teilbereichs 15 liegt. Dem Fahrzeuglenker bleibt es selbst überlassen, die vorhandene Information zu verarbeiten und gegebenenfalls beispielsweise ein Lenk- bzw. Bremsmanöver zur Vermeidung einer Kollision einzuleiten.

In analoger Weise könnte dem Fahrzeuglenker eine Information angezeigt werden, wenn eine dem Fahrzeug 1 sich nähernde Person, Tier oder Ähnliches eine Gefahrensituation bedingen könnte.

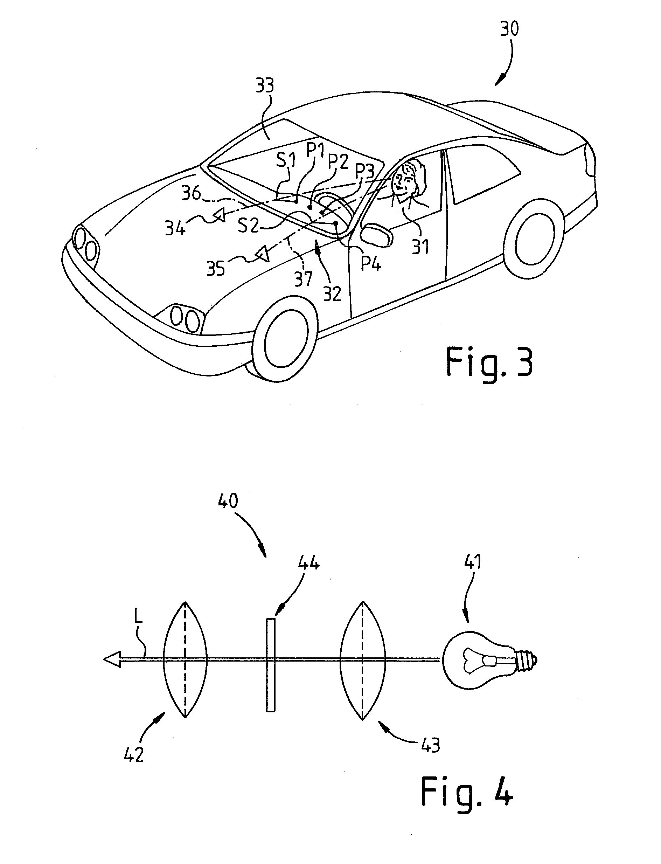

Figur 3 zeigt ein schematisiertes räumlich dargestelltes Fahrzeug 30, in dem sich ein Fahrzeuglenker 31 in Fahrerposition befindet. Das Fahrzeug 30 ist mit einer erfindungsgemäßen Vorrichtung 32 ausgestattet. Der Blick des Fahrzeuglenkers 31 ist auf den Bereich in Fahrtrichtung vor dem Fahrzeug 30 gerichtet. Im Nahbereich außerhalb des Fahrzeuges 30 vor der Frontscheibe 33 sind die virtuellen Bilder von zwei Warnsymbolen 34, 35 gezeigt, die wirklich auf die Innenseite der Frontscheibe 33 projiziert und von dort zum Fahrzeuglenker 31 hin gespiegelt werden. Die Blickrichtung des Fahrzeuglenkers 31 bei Betrachtung des Warnsymbols 34 bzw. 35 ist durch eine gestrichelte Linie 36 bzw. 37 kenntlich gemacht. Diese Teilspiegelung erfolgt durch die Dichteunterschiede an der Grenzfläche zwischen Luft und Glas auf der Frontscheibe.

Die Vorrichtung 32 ist wie in Figur 3 gezeigt, im Bereich der Frontscheibenwurzel im Armaturenbereich des Fahrzeugs 30 angeordnet. Die Vorrichtung 32 ist dabei als kompakte Einheit aus mehreren Projektionsmodulen aufgebaut, die an den Stellen P1 bis P4 angeordnet sind. Eine solche kompakte Einheit kann beispielsweise quaderförmig mit den Außenmaßen 20 cm / 20 cm / 5 cm (Breite / Tiefe / Höhe) ausgebildet sein. Die mehreren Projektionsmodule sind in der Regel gleichartig, es kann jedoch auch eine Anordnung aus unterschiedlichen Projektionsmodulen sinnvoll sein.

Eine erfindungsgemäße Vorrichtung weist mehrere Projektionsmodule zur Anzeige einer Information auf. Mit der Vorrichtung, wie sie in Figur 3 gezeigt ist, sind mehrere Projektionsmodule der Vorrichtung 32 in horizontaler Richtung gemäß P1 bis P4 nebeneinander ausgebildet, beispielhaft im Bereich des Armaturenbretts. Die in horizontaler Richtung beiden äußersten Positionen P1 und P4 bilden an den Stellen S1 und S2 auf der Frontscheibe 33 eine Information ab, die als virtuelles Bild eines Warnsymbols 34 und eines Warnsymbols 35 vom Fahrzeuglenker 31 erkannt wird. Dabei wird deutlich, dass in horizontaler Richtung in Blickrichtung vor dem Fahrzeuglenker 31 innerhalb eines durch die Stellen S1 und S2 begrenzten Bereiches eine Information darstellbar ist. Dieser darstellbare Bereich wird durch die Umrisslinie 14 des Teilbereichs 15 gemäß der Darstellung in Figur 1 umrissen.

Figur 4 zeigt stark vereinfacht in schematischer Ansicht einen Aufbau eines erfindungsgemäßen Projektionsmoduls 40. Als Lichterzeuger bzw. Beleuchtungseinrichtung 41, vereinfacht als Glühbirne dargestellt, kommen unterschiedliche, an sich bekannte Einrichtungen in Frage, beispielsweise einfache Lichterzeuger wie LEDs, Laser und dergleichen. Des Weiteren ist eine einfache Projektionsoptik mit vergleichsweise kleinen Abmaßen und niedriger Qualität in dem dargestellten Projektionsmodul 40 gezeigt. Die Projektionsoptik kann aus einem Linsensystem bestehen, beispielsweise einer Projektionslinse 42 und einer optional vorhandenen Kollimationslinse 43 zur Lichtstrahlbündelung . Zwischen Beleuchtungseinrichtung 41 und der Projektionslinse 42 ist eine Bilderzeugungseinrichtung 44 angeordnet. Diese kann aus einer Lichtkammer mit festen Symbolen in der Art eines Kombiinstruments oder als vergleichsweise kleine Anzeige mit geringer Bildpunktzahl, z.B. LCD, LCOS, OLED oder Laser-Scanner ausgebildet sein.

Die in Figur 4 gezeigten Elemente des Projektionsmoduls 40 können auf einem gemeinsamen Grundelement (PCB) montiert sein. Die gesamte Einheit aus mehreren Projektionsmodulen 40 lässt sich in einem gemeinsamen Gehäuse in kompakter Bauform zusammenstellen. In Figur 4 ist außerdem schematisch der Weg eines Teils des von der Beleuchtungseinrichtung 41 ausgehenden Lichtes vereinfachend als Pfeil L gezeigt.

Die Bilderzeugungseinrichtung 44 ist in vielfältiger Weise ausbildbar, z.B. als Dia, Lichtventil, z.B. Matrixanzeige, als Segmentanzeige, z.B. 7-Segmentanzeige und dergleichen. Die Bilderzeugungseinrichtung 44 kann auch aus mehreren hintereinander anordenbaren Elementen bestehen, wovon je nach anzuzeigender Information jeweils ein Element mit einem bestimmten Bild eines Symbols zur Projizierung in den jeweils zugeordneten Scheibenabschnitt auswählbar ist und durchleuchtet wird.

## Patentansprüche

1. Vorrichtung zur visuellen Darstellung einer Information (20, 21, 34, 35) auf einem Abschnitt einer transparenten oder teiltransparenten Scheibe (4, 33) eines Fahrzeugs (1, 30), der im für einen Fahrzeuglenker (31) sichtbaren Bereich liegt, mit einem Projektionsmodul (40), mit welchem die Information (20, 21, 34, 35) in den Scheibenabschnitt projizierbar ist, **dadurch gekennzeichnet, dass** mehrere Projektionsmodule (40) vorgesehen sind, mit welchen sich zumindest zeitweilig die Information (20, 21, 34, 35) im jeweils zugeordneten Scheibenabschnitt darstellen lässt.

2. Vorrichtung nach Anspruch 1, **dadurch gekennzeichnet, dass** Detektionsmittel zur Erfassung der Umgebung des Fahrzeugs (1, 30) vorgesehen sind, wobei die Projektionsmodule (40) eine Information (20, 21, 34, 35) in den einem Projektionsmodul (40) jeweils zugeordneten Scheibenabschnitt in Abhängigkeit von den mit den Detektionsmitteln erfassten Daten projizieren.

3. Vorrichtung nach Anspruch 1 oder Anspruch 2, **dadurch gekennzeichnet, dass** mit Hilfe der Detektionsmittel eine Projektion einer Information (20, 21, 34, 35) durch die Projektionsmodule (40) derart vorgenommen wird, dass für den Fahrzeuglenker (31) bei der Betrachtung eines Projektionsbildes im Scheibenabschnitt eine vergleichsweise leichte, insbesondere intuitive Korrelation, insbesondere im Hinblick auf die Position eines von den Detektionsmitteln erfassten Objekts (6) möglich ist.

4. Vorrichtung nach einem der vorhergehenden Ansprüche, **dadurch gekennzeichnet, dass** die einem erfassten Objekt (6) zugehörige Information (20, 21) in einen transparenten oder teiltransparenten Scheibenabschnitt projizierbar ist, der im Blickfeld des Fahrzeuglenkers (31) bei der Betrachtung des Objekts (6) liegt.

5. Vorrichtung nach einem der vorhergehenden Ansprüche, **dadurch gekennzeichnet, dass** die Projektion der Information (20, 21, 34, 35) auf einen Scheibenabschnitt erfolgt, dessen Position auf der Scheibe (4, 33) dem Fahrzeuglenker (31) eine eindeutige Richtungszuordnung auf das entsprechenden Objekts (6) ermöglicht.

6. Vorrichtung nach einem der vorhergehenden Ansprüche, **dadurch gekennzeichnet, dass** Projektionsflächen der Projektionsmodule (40) in einem vorgegebenen Teilbereich (15) der transparenten oder teiltransparenten Scheibe (4, 33) konzentriert sind.

7. Vorrichtung nach einem der vorhergehenden Ansprüche, **dadurch gekennzeichnet, dass** die mehreren Projektionsmodule derart angeordnet sind, dass zumindest in horizontaler Richtung mehrere für den Fahrzeuglenker (31) unterscheidbare Informationen (34, 35) nebeneinander darstellbar sind.

8. Vorrichtung nach einem der vorhergehenden Ansprüche, **dadurch gekennzeichnet, dass** das Projektionsmodul (40) zumindest eine Beleuchtungseinrichtung (41), einen Bildträger (44) und eine Projektionsoptik (42, 43) umfasst.
